# EUROPEAN PATENT APPLICATION

(11) **EP 4 376 147 A1**
(43) Date of publication of application: **29.05.2024**
(21) Application number: 21960385.9
(22) Date of filing: 29.10.2021
(51) Int. Cl.: H01M 10/0525

(54) **BATTERY, ELECTRIC DEVICE, AND METHOD AND DEVICE FOR PREPARING BATTERY**

(30) Priority: 12.10.2021 CN 202111188271
(71) Applicant: Contemporary Amperex Technology Co., Limited, Fujian PRC 352100 (CN)
(72) Inventor: XU, Hu, Ningde, Fujian 352100 (CN)
(74) Representative: von Tietzen und Hennig, Nikolaus
(86) International application number: PCT/CN2021/127491
(87) International publication number: WO 2023/060658

(57) **Abstract**

Embodiments of this application provide a battery (10), an electric apparatus, a method for manufacturing battery, and an apparatus for manufacturing battery, so as to enhance stiffness and strength of the battery. The battery (10) includes: a box (100); and at least one row of battery cells (20) accommodated in the box, where the battery cell (20) is a polyhedral structure and includes a first wall (201) and a second wall (202) connected to each other, the first wall (201) being perpendicular to a first direction (z), the second wall (202) being a wall with a largest area in the battery cell (20) and oblique to the first direction (z), and the first direction (z) being parallel to the direction of gravity. Each row of battery cells (20) in the at least one row of battery cells (20) are arranged along a second direction (y) perpendicular to the first direction (z), and adjacent ones of the battery cells (20) are attached to each other via the second wall (202).

## Description

This application claims priority to Chinese Patent Application No. 202111188271.0, filed with the China National Intellectual Property Administration on October 12, 2021 and entitled "BATTERY CELL, BATTERY, AND ELECTRIC APPARATUS", which is incorporated herein by reference in its entirety.

### TECHNICAL FIELD

Embodiments of this application relate to the field of batteries, and more specifically, to a battery, an electric apparatus, and a method and an apparatus for manufacturing battery.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development.

Batteries are mounted in electric apparatuses, for example, electric vehicles. Movement of the electric vehicle causes some impact on the battery, and if the battery has weak stiffness and strength, such impact will have an adverse effect on the performance of the battery and may cause safety problems. Therefore, finding a solution to enhance the stiffness and strength of batteries is an urgent technical problem that needs to be solved for battery technologies.

### SUMMARY

This application provides a battery, an electric apparatus, a method for manufacturing battery, and an apparatus for manufacturing battery, so as to enhance the stiffness and strength of the battery.

According to a first aspect, a battery is provided, including: a box; and at least one row of battery cells accommodated in the box, where the battery cell is a polyhedral structure and includes a first wall and a second wall connected to each other, the first wall being perpendicular to a first direction, the second wall being a wall with a largest area in the battery cell and oblique to the first direction, and the first direction being parallel to the direction of gravity. Each row of battery cells in the at least one row of battery cells are arranged along a second direction perpendicular to the first direction, and adjacent ones of the battery cells are attached to each other via the second wall.

According to the technical solution of the embodiments of this application, in the box of the battery, in a row of battery cells arranged along the second direction, the second walls of adjacent battery cells attached to each other are oblique to the first direction, that is, the second walls are oblique to the direction of gravity. Therefore, interaction forces parallel to the direction of gravity are formed between adjacent second walls such that at least one oblique second wall of each battery cell is held down by an oblique second wall of a battery cell adjacent thereto. The interaction forces formed between the adjacent battery cells make the two adjacent battery cells bind and constrain each other, enhancing the overall stiffness and strength of the battery and reducing safety risks caused by vibration and impact on the battery in use. In addition, the second wall may be a wall with a largest area in the battery cell, so that the second wall with the largest area can be used for implementing attachment between the adjacent battery cells to the greatest extent, which increases the interaction forces between the adjacent battery cells, thereby enhancing stability and overall stiffness and strength of the battery.

In some possible implementations, the battery cell includes two first walls parallel to each other and two second walls parallel to each other, and the battery cell has a parallelogram cross section on a plane perpendicular to the first walls and the second walls.

According to the technical solution in these implementations, the battery cell may include two second walls oblique to the first direction and parallel to each other. On one hand, the battery cell can be attached to adjacent left and right two battery cells via the two oblique second walls, thus further implementing interconnection of a plurality of battery cells. On the other hand, the battery cell has a relatively regular and symmetrical structure, facilitating manufacture and mounting of the battery cell.

In some possible implementations, the battery cell includes two first walls parallel to each other and two second walls unparallel to each other, and the battery cell has a trapezoid cross section on a plane perpendicular to the first walls and the second walls.

In some possible implementations, the first wall and the second wall extend along a length direction of the battery cell, and the length direction of the battery cell is perpendicular to the first direction and the second direction.

According to the technical solution in these implementations, the first wall and the second wall extend along the length direction of the battery cell, which can make the first wall and the second wall have a longer length and thus have a larger area. For the first wall, it is perpendicular to the first direction, or perpendicular to the direction of gravity, and if the first wall has a larger area, when the battery cell is disposed on the horizontal plane via the first wall, the battery cell can have higher stability. For the second wall, if it has a larger area, the interaction forces between the second walls of adjacent battery cells can be increased, and more structural adhesives can be provided on the second wall, improving the stability of the battery cell.

In some possible implementations, each row of battery cells are arranged sequentially along a thickness direction of the battery cells, and the thickness direction of the battery cells is parallel to the second direction.

In some possible implementations, the battery cell further includes a third wall located at an end of the battery cell in the length direction and connected to the first wall and the second wall; and the battery cell further includes an electrode terminal disposed on the third wall.

According to the technical solution in these implementations, the electrode terminal of the battery cell is disposed on the third wall located at the end of the battery cell in the length direction, without affecting attachment of the first wall and the second wall of the battery cell to other components, where the first wall and the second wall extend along the length direction of the battery cell and have a larger area. This ensures higher stability of the battery cell. In addition, the third wall may have a smaller area, so that length of a busbar for electrical connection between adjacent battery cells can be shortened, thereby facilitating disposition and mounting of the busbar in the box of the battery.

In some possible implementations, the battery cell further includes a pressure relief mechanism disposed on the third wall or the first wall.

According to the technical solution in these implementations, the pressure relief mechanism is disposed on the third wall or the first wall other than the second wall in the battery cell, without affecting attachment of the second wall to other components either, thereby ensuring higher stability of the battery cell.

In some possible implementations, in the at least one row of battery cells, a plurality of battery cells in a same row are arranged along the second direction and sequentially attached to each other via the second walls to form an entirety.

According to the technical solution in these implementations, the plurality of battery cells in the same row are sequentially attached to each other to form an entirety and be mounted in the box, and no other spacer is provided between the plurality of battery cells, so that energy density and overall quality of the battery can be improved, optimizing overall performance of the battery.

In some possible implementations, a first spacer is provided between the plurality of battery cells in the same row, and the first spacer has walls oblique to the first direction so as to be attached to the second walls of two battery cells adjacent thereto, where the first spacer is at least one of the following structures: a cross beam, a thermal management component, and a structural adhesive.

According to the technical solution in these implementations, the first spacer is provided between a row of battery cells. On one hand, the overall stiffness and strength of the battery can be enhanced, improving overall impact resistance of the battery. On the other hand, the first spacer can also support the second walls of the battery cells, avoiding continuous accumulation of stress of the plurality of battery cells in an arrangement direction thereof in case of swelling of the battery cells, enhancing strength and stiffness of the plurality of battery cells in the arrangement direction thereof, and improving overall stability and safety of the battery. On the third hand, the first spacer can further block heat transfer. When a battery cell located on one side of the first spacer experiences thermal runaway, a large amount of heat generated by this battery cell is blocked by the first spacer to some extent, thereby preventing the heat from being transferred to a battery cell located on the other side of the first spacer, guaranteeing normal operation of the battery cell located on the other side of the first spacer, and improving the overall safety of the battery.

In some possible implementations, the first spacer has a parallelogram or trapezoid cross section on the plane perpendicular to the first walls and the second walls.

According to the technical solution in these implementations, in the case that the first spacer has a trapezoid cross section on the plane perpendicular to the first walls and the second walls, when a plurality of battery cells swell, stress generated in an arrangement direction (that is, the second direction) of a group of battery cells located on one side of the first spacer can partially offset with stress generated in an arrangement direction (the second direction) of a group of battery cells located on the other side of the first spacer, thereby further enhancing the overall stiffness and strength of the battery, improving the stability of the battery, and guaranteeing the safety performance of the battery.

In some possible implementations, the first spacer is provided in a quantity of less than or equal to 5.

According to the technical solution in these implementations, controlling the quantity of the first spacer in the battery to be within 5 can balance the overall strength and energy density of the battery.

In some possible implementations, a second spacer is provided between two adjacent rows of battery cells, and the second spacer is at least one of the following structures: a cross beam, a thermal management component, and a structural adhesive.

According to the technical solution in these implementations, the second spacer is provided between two adjacent rows of battery cells, which can enhance the overall stiffness and strength of the battery, thereby improving overall impact resistance of the battery. In addition, if the second spacer is a thermal management component, for example, a cooling component such as a cooling plate, this thermal management component has a thermal management function for the battery cells apart from having certain stiffness and strength, and can regulate the temperatures of the battery cells, further guaranteeing working performance and safety performance of the battery.

In some possible implementations, the battery further includes an end plate disposed at least at one end of the at least one row of battery cells in the second direction, where the end plate has a wall oblique to the first direction, and the oblique wall is configured to be attached to the second wall of the battery cell.

According to the technical solution in these implementations, the end plate can fasten and constrain the at least one row of battery cells in the second direction. In addition, the end plate can also support the second walls located on two sides of the at least one row of battery cells and having a larger area, and bear stress on the second walls caused by swelling of the battery cells, so as to improve stability of the battery cells in the box and the overall strength and stiffness of the battery.

In some possible implementations, thickness of the end plate at an end facing the direction of gravity is greater than thickness of the end plate at an end facing away from the direction of gravity.

According to the technical solution in these implementations, the end plate has a larger thickness at the end facing the direction of gravity, which can ensure that the battery has higher stiffness, strength, and stability at an end of the battery facing the direction of gravity. When the battery is mounted at a chassis of a vehicle, the battery can better resist external impact such as flying stones on the bottom of the vehicle, thus improving mounting stability of the battery in the vehicle and guaranteeing operation performance of the battery.

In some possible implementations, the battery further includes thermal management components corresponding to walls other than the second walls of the at least one row of battery cells for thermal management of the at least one row of battery cells.

In some possible implementations, the thermal management component is disposed on a side of the at least one row of battery cells facing interior of an electric apparatus in which the at least one row of battery cells are located.

According to the technical solution in these implementations, the thermal management component is disposed on a side of the at least one row of battery cells facing interior of an electric apparatus in which the at least one row of battery cells are located, which can isolate the at least one row of battery cells from the interior of the electric apparatus, preventing impact on the interior of the electric apparatus caused by thermal runaway of the battery cell, thus improving overall safety performance of the electric apparatus.

In some possible implementations, the pressure relief mechanism of the at least one row of battery cells is disposed on a side of the at least one row of battery cells facing away from the interior of the electric apparatus in which the at least one row of battery cells are located.

According to the technical solution in these implementations, the pressure relief mechanism of the at least one row of battery cells is disposed away from the interior of the electric apparatus, which can reduce the impact on the interior of the electric apparatus caused by high-temperature emissions discharged by the battery cell through the pressure relief mechanism when the battery cell experiences thermal runaway, further improving the safety performance of the electric apparatus.

According to a second aspect, an electric apparatus is provided, including the battery in any one of the first aspect or the possible implementations of the first aspect, where the battery is configured to supply electric energy.

According to a third aspect, a method for manufacturing battery is provided, including: providing a box; providing at least one row of battery cells, where the battery cell is a polyhedral structure and includes a first wall and a second wall connected to each other, the first wall being perpendicular to a first direction, the second wall being a wall with a largest area in the battery cell and oblique to the first direction, and the first direction being parallel to the direction of gravity; where each row of battery cells in the at least one row of battery cells are arranged along a second direction perpendicular to the first direction, and adjacent ones of the battery cells are attached to each other via the second wall; and accommodating the at least one row of battery cells in the box.

According to a fourth aspect, an apparatus for manufacturing battery is provided, including: a provision module, configured to: provide a box; and provide at least one row of battery cells, where the battery cell is a polyhedral structure and includes a first wall and a second wall connected to each other, the first wall being perpendicular to a first direction, the second wall being a wall with a largest area in the battery cell and oblique to the first direction, and the first direction being parallel to the direction of gravity; where each row of battery cells in the at least one row of battery cells are arranged along a second direction perpendicular to the first direction, and adjacent ones of the battery cells are attached to each other via the second wall; and a mounting module, configured to accommodate the at least one row of battery cells in the box.

According to the technical solutions in the embodiments of this application, in the box of the battery, in a row of battery cells arranged along the second direction, the second walls of adjacent battery cells attached to each other are oblique to the first direction, that is, the second walls are oblique to the direction of gravity. Therefore, interaction forces parallel to the direction of gravity are formed between adjacent second walls such that at least one oblique second wall of each battery cell is held down by an oblique second wall of a battery cell adjacent thereto. The interaction forces formed between the adjacent battery cells make the two adjacent battery cells bind and constrain each other, thus enhancing overall stiffness and strength of the battery and reducing safety risks caused by vibration and impact on the battery in use. In addition, the second wall may be a wall with a largest area in the battery cell, so that the second wall with the largest area can be used for implementing attachment between the adjacent battery cells to the greatest extent, which increases the interaction forces between the adjacent battery cells, thereby enhancing stability and overall stiffness and strength of the battery.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery cell according to an embodiment of this application;
FIG. 4 is a schematic structural diagram of a battery according to an embodiment of this application;
FIG. 5 shows two schematic structures of a battery cell according to an embodiment of this application;
FIG. 6 is a front and side view of a battery cell according to an embodiment of this application;
FIG. 7 shows schematic structures of two types of battery cells according to an embodiment of this application;
FIG. 8 is a schematic top and cross-sectional view of a battery according to an embodiment of this application;
FIG. 9 is a schematic top and cross-sectional view of a battery according to an embodiment of this application;
FIG. 10 shows schematic cross-sectional views of two types of batteries according to an embodiment of this application;
FIG. 11 is a schematic top and cross-sectional view of a battery according to an embodiment of this application;
FIG. 12 is a schematic top and cross-sectional view of a battery according to an embodiment of this application;
FIG. 13 is a schematic cross-sectional view of a battery according to an embodiment of this application;
FIG. 14 is a schematic flowchart of a method for manufacturing battery according to an embodiment of this application; and
FIG. 15 is a schematic block diagram of an apparatus for manufacturing battery according to an embodiment of this application.

The accompanying drawings are not drawn to scale.

### DESCRIPTION OF EMBODIMENTS

The following further describes the implementations of this application in detail with reference to the accompanying drawings and embodiments. The detailed description of the following embodiments and the accompanying drawings are intended to illustrate the principle of this application, rather than to limit the scope of this application, meaning that this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the apparatuses or components mentioned must have specific orientations or must be constructed or manipulated according to specific orientations. These terms shall therefore not be construed as limitations on this application. In addition, the terms "first", "second", and "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all refer to the orientations as shown in the drawings, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application based on specific situations.

The term "and/or" in this specification is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In this application, a battery is a physical module that includes one or more battery cells for providing electric energy. For example, the battery mentioned in this application may include a battery module, a battery pack, or the like. A battery typically includes a box configured to enclose one or more battery cells. The box can prevent liquids or other foreign matter from affecting charging or discharging of the battery cell.

Optionally, the battery cell may include a lithium-ion secondary battery, a lithium-ion primary battery, a lithium-sulfur battery, a sodium/lithium-ion battery, a sodium-ion battery, a magnesium-ion battery, or the like. This is not limited in the embodiments of this application. In some implementations, the battery cell may be also referred to as a cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of current collector uncoated with the positive electrode active substance layer protrudes out of the part of current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of current collector uncoated with the negative electrode active substance layer protrudes out of the part of current collector coated with the negative electrode active substance layer and serves as a negative tab. The negative electrode current collector may be made of copper, and the negative electrode active substance may be carbon, silicon, or the like. To allow a large current to pass through without any fusing, a plurality of positive tabs are provided and stacked together, and a plurality of negative tabs are provided and stacked together. The separator may be made of polypropylene (Polypropylene, PP), polyethylene (Polyethylene, PE), or the like. In addition, the electrode assembly may be a winding structure or a laminated structure, but the embodiments of this application are not limited thereto.

For the development of battery technology, many design factors need to be considered, for example, performance parameters such as energy density, cycle life, discharge capacity, and charge and discharge rate, as well as stability of the battery mounted in an electric apparatus, so as to improve safety of the battery in the electric apparatus.

In some battery packaging technologies, for conventional prismatic battery cells, for example, blade battery cells, larger surfaces of the battery cell can be fixedly connected to each other by using a structural adhesive, which makes the entire battery have enough strength and stiffness to resist external impact. However, in this case, an applying area of the structural adhesive between the battery cells is limited, and there is no interaction force between the battery cells. This affects mounting stability of the battery cells in the box and leads to limited overall strength and stiffness of the packaged battery, thus bringing some potential safety hazards.

In view of this, this application provides a technical solution to design the battery cell as a battery cell being a polyhedral structure different from the conventional prismatic battery cell. The battery cell being the polyhedral structure includes a first wall and a second wall connected to each other, where the first wall is perpendicular to the direction of gravity, the second wall is oblique to the direction of gravity, and the second wall is a wall with a largest area in the battery cell. A battery may include at least one row of battery cells, where each row of battery cells in the at least one row of battery cells are arranged along the horizontal plane, and adjacent battery cells are attached to each other via their second walls, so as to form interaction forces parallel to the direction of gravity between adjacent second walls. Thus, at least one second wall of each battery cell in each row of battery cells is held down by an oblique second wall of a battery cell adjacent thereto, making each battery cell bound by the battery cell adjacent thereto. As interaction forces are formed between the battery cells, the battery cells constrain each other, which can enhance the overall stiffness and strength of the battery and reduce safety risks caused by vibration and impact on the battery in use.

The technical solutions described in the embodiments of this application are applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of this application are applicable to not only the apparatuses described above but also all apparatuses using batteries. However, for brevity of description, in the following embodiments, an electric vehicle is used as an example for description.

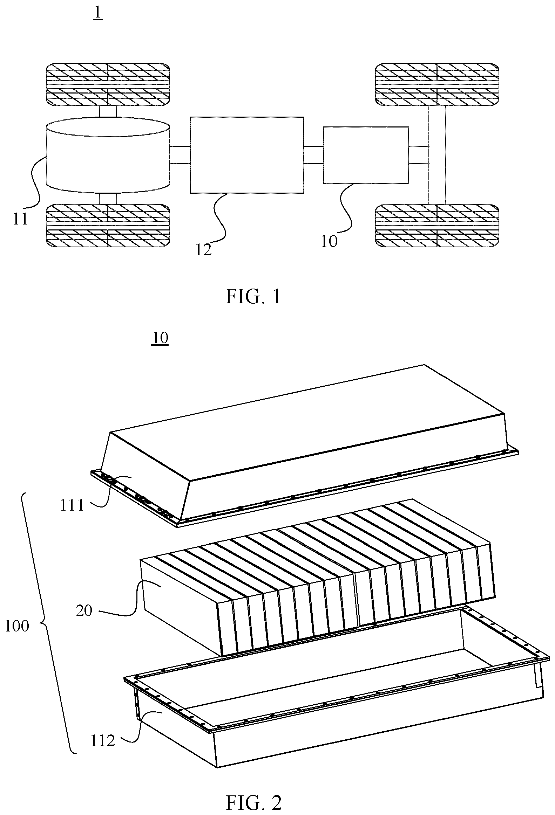

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 11, a controller 12, and a battery 10 may be provided inside the vehicle 1, where the controller 12 is configured to control the battery 10 to supply power to the motor 11. For example, the battery 10 may be disposed at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to satisfy power needs of start, navigation, and running of the vehicle 1. In another embodiment of this application, the battery 10 can be used not only as the operational power source for the vehicle 1, but also as a driving power source for the vehicle 1, replacing or partially replacing fossil fuel or natural gas to provide driving traction for the vehicle 1.

To meet different power usage requirements, the battery may include a plurality of battery cells, and the plurality of battery cells may be connected in series, parallel, or series-parallel, where being connected in series-parallel means a combination of series and parallel connections. The battery may also be called a battery pack. Optionally, a plurality of battery cells may be connected in series, parallel, or series-parallel to form a battery module first, and then a plurality of battery modules are connected in series, parallel, or series-parallel to form a battery. In a word, the plurality of battery cells may be directly combined into a battery, or may first combined into battery modules that are then combined into a battery.

For example, as shown in FIG. 2 that is a schematic structural diagram of a battery 10 according to an embodiment of this application, the battery 10 may include a plurality of battery cells 20. The battery 10 may further include a box 100 (or referred to as a cover body). Inside the box 100 is a hollow structure, and the plurality of battery cells 20 are accommodated in the box 100. As shown in FIG. 2, the box 100 may include two portions which are referred to herein as a first portion 111 and a second portion 112 respectively, and the first portion 111 and the second portion 112 are snap-fitted together. Shapes of the first portion 111 and the second portion 112 may be determined according to the shape of the combined plurality of battery cells 20, and the first portion 111 and the second portion 112 each may have an opening. For example, the first portion 111 and the second portion 112 each may be a hollow cuboid and have only one face with an opening, the opening of the first portion 111 is disposed opposite the opening of the second portion 112, and the first portion 111 and the second portion 112 are snap-fitted to form a box body 100 with an enclosed chamber. The plurality of battery cells 20 are connected in parallel, series, or series-parallel and then placed into the box 100 formed after the first portion 111 and the second portion 112 are snap-fitted.

Optionally, in an implementation, a plurality of battery cells (cell) 20 may be first integrated into at least one battery module (module), and then the battery module is mounted in the box 100 of the battery 10 to form a battery pack (pack) in form. In this implementation, an auxiliary structural member such as a cross beam may be provided between the battery modules, which can improve mounting stability of the battery modules in the box 100.

Optionally, in a second implementation, a plurality of battery cells 20 may alternatively be directly connected to each other and mounted in the box 100 to form a battery pack in form, without an intermediate state of a battery module. An auxiliary structural member such as a cross beam may not be required in the box 100, thus reducing the mass of the battery 10 and increasing energy density of the battery 10. This implementation may also be called a battery cell to battery pack (cell to pack, CTP) mounting technology in the related technologies.

Optionally, in a third implementation, the box 100 may be integrated in an electric apparatus in which the battery 10 is located. In other words, the box 100 may be integrally formed with structural members in the electric apparatus. After being connected to each other, the plurality of battery cells 20 may be directly mounted in the box 100 of the electric apparatus. In an example, the box 100 may be integrated into a local region of a chassis of the foregoing vehicle 1, and after being connected to each other, the plurality of battery cells 20 may be directly mounted at the chassis of the vehicle 1. This implementation may also be called a battery cell to chassis (cell to chassis, CTC) mounting technology as in the related technologies.

Optionally, the battery 10 may further include other structures. Details are not described herein. For example, the battery 10 may further include a busbar configured to implement an electrical connection between the plurality of battery cells 20, such as a parallel connection, a series connection, or a series-parallel connection. Specifically, the busbar may implement the electrical connection between the battery cells 20 by connecting electrode terminals of the battery cells 20. Further, the busbar may be fastened on the electrode terminals of the battery cells 20 by welding. Electric energy of the plurality of battery cells 20 may be further led out by a conductive mechanism that passes through the box 100. Optionally, the conductive mechanism may also belong to the busbar.

Depending on different power needs, the battery cells 20 may be provided in any quantity. The plurality of battery cells 20 may be connected in series, parallel, or series-parallel to implement large capacity or high power.

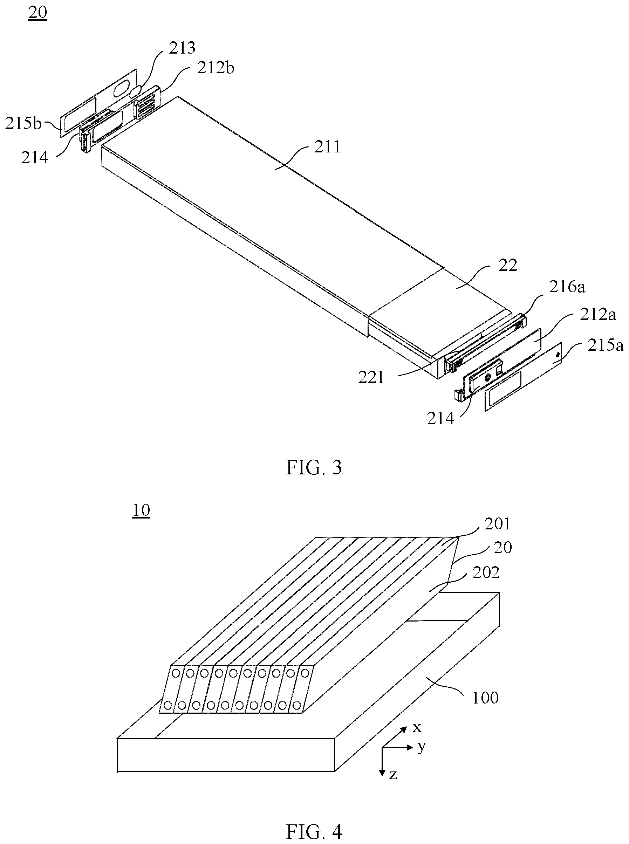

As shown in FIG. 3 that is a schematic structural diagram of a battery cell 20 according to an embodiment of this application, the battery cell 20 includes one or more electrode assemblies 22, a housing 211, a first cover plate 212a, and a second cover plate 212b. Walls of the housing 211, the first cover plate 212a, and the second cover plate 212b are all referred to as walls of the battery cell 20. The shape of the housing 211 depends on the shape of a combination of the one or more electrode assemblies 22. As in an example, the housing 211 shown in FIG. 3 may be a hollow cuboid. At least one surface of the housing 211 has an opening for placing the one or more electrode assemblies 22 into the housing 211. For example, in the embodiment shown in FIG. 3, two opposite surfaces of the housing 211 each have an opening. The first cover plate 212a and the second cover plate 212b cover the openings in the two surfaces respectively and are connected to the housing 211 to form an enclosed cavity for accommodating the electrode assembly 22. The housing 211 is filled with an electrolyte, for example, a liquid electrolyte.

The battery cell 20 may further include two electrode terminals 214. Optionally, as shown in FIG. 3, the two electrode terminals 214 may be disposed on the first cover plate 212a and the second cover plate 212b respectively. Alternatively, in some other embodiments, the two electrode terminals 214 may be disposed on a same cover plate, for example, both disposed on the first cover plate 212a or the second cover plate 212b.

The first cover plate 212a and the second cover plate 212b are generally shaped as a flat plate, and the two electrode terminals 214 may be fixed on flat surfaces of the first cover plate 212a and the second cover plate 212b respectively. The two electrode terminals 214 are a positive electrode terminal and a negative electrode terminal respectively. Each electrode terminal 214 is correspondingly provided with a connecting member or a current collecting member that is located between the first cover plate 212a and the electrode assembly 22 and between the second cover plate 212b and the electrode assembly 22 for electrically connecting the electrode assembly 22 and the electrode terminal 214.

Optionally, as shown in FIG. 3, the battery cell 20 may further include a first bracket 216a and a second bracket (not shown in the figure). The first bracket 216a is disposed between the electrode assembly 22 and the first cover plate 212a for fastening and connecting the first cover plate 212a. Correspondingly, the second bracket is disposed between the electrode assembly 22 and the second cover plate 212b for fastening and connecting the second cover plate 212b. Optionally, the foregoing connecting members connecting the electrode assembly 22 and the electrode terminal 214 may be located at the first bracket 216a and the second bracket respectively.

In addition, in the battery cell 20, each electrode assembly 22 has a first tab 221 and a second tab. The first tab 221 and the second tab have opposite polarities. For example, when the first tab 221 is positive, the second tab is negative. The first tabs 221 of the one or more electrode assemblies 22 are connected to one electrode terminal through one connecting member, and the second tabs of the one or more electrode assemblies 22 are connected to the other electrode terminal through the other connecting member. For example, as shown in FIG. 3, the electrode terminal 214 located on the first cover plate 212a may be connected to the first tab 221 via one connecting member located at the first bracket 216a. In addition, the other electrode terminal 214 located on the second cover plate 212b may be connected to the second tab via the other connecting member located at the second bracket.

In an example, a pressure relief mechanism 213 may further be provided on a wall of the battery cell 20. The pressure relief mechanism 213 is configured to be actuated to relieve internal pressure or temperature when the internal pressure or temperature of the battery cell 20 reaches a threshold.

Optionally, in another embodiment of this application, the pressure relief mechanism 213 and the electrode terminal 214 are disposed on a same wall of the battery cell 20. In an example, as shown in FIG. 3, the electrode terminal 214 and the pressure relief mechanism 213 may both be disposed on the second cover plate 212b of the battery cell 20.

The pressure relief mechanism 213 and the electrode terminal 214 being disposed on the same wall of the battery cell 20 can facilitate the processing and mounting of the pressure relief mechanism 213 and the electrode terminal 214, and is conducive to improving the production efficiency of the battery 10.

Certainly, in other embodiments of this application, the pressure relief mechanism 213 and the electrode terminal 214 may alternatively be disposed on different walls of the battery cell 20. For example, the two electrode terminals 214 in the battery 10 are respectively disposed on the first cover plate 212a and the second cover plate 212b of the battery cell 20, while the pressure relief mechanism 213 is disposed on a wall other than the first cover plate 212a and the second cover plate 212b in the battery 10.

The pressure relief mechanism 213 may be a part of the wall on which it is located or be a separate structure from the wall on which it is located, and may be fastened on the wall on which it is located by, for example, welding. For example, in the embodiment shown in FIG. 3, when the pressure relief mechanism 213 is a part of the second cover plate 212b, the pressure relief mechanism 213 may be formed by providing an indentation on the second cover plate 212b. Thickness of the second cover plate 212b corresponding to the indentation is less than thickness of regions of the pressure relief mechanism 213 other than the indentation. The weakest portion of the pressure relief mechanism 213 is at the indentation. When gas generated by the battery cell 20 is too much and the internal pressure of the housing 211 rises and reaches a threshold, or internal reactions of the battery cell 20 generate heat causing the internal temperature of the battery cell 20 to rise and reach a threshold, the pressure relief mechanism 213 may break at the indentation so that the inside and the outside of the housing 211 are communicated and the gas pressure and temperature to are discharged out through the breakage of the pressure relief mechanism 213, thereby preventing the battery cell 20 from exploding.

In addition, the pressure relief mechanism 213 may be various possible pressure relief mechanisms. This is not limited in embodiments of this application. For example, the pressure relief mechanism 213 may be a temperature-sensitive pressure relief mechanism configured to melt when the internal temperature of the battery cell 20 provided with the pressure relief mechanism 213 reaches the threshold; and/or the pressure relief mechanism 213 may be a pressure-sensitive pressure relief mechanism configured to break when the internal gas pressure of the battery cell 20 provided with the pressure relief mechanism 213 reaches the threshold.

Optionally, as shown in FIG. 3, the battery cell 20 may further include a first protective layer 215a and a second protective layer 215b, where the first protective layer 215a and the second protective layer 215b cover the first cover plate 212a and the second cover plate 212b respectively to protect components on the two cover plates. Optionally, when the first cover plate 212a and the second cover plate 212b are metal cover plates, the first protective layer 215a and the second protective layer 215b may be insulation layers for insulating the metal cover plates from the outside. In addition, it can be learned from FIG. 3 that openings fitting the electrode terminal 214 and the pressure relief mechanism 213 can be formed in the first protective layer 215a and the second protective layer 215b, so that the electrode terminal 214 is connected to the busbar through the opening, and the pressure relief mechanism 213 releases the internal gas pressure of the battery cell 20 through the opening.

FIG. 4 is a schematic structural diagram of a battery 10 according to an embodiment of this application.

As shown in FIG. 4, the battery 10 includes: a box 100; and at least one row of battery cells 20 accommodated in the box 100, where the battery cell is a polyhedral structure and includes a first wall 201 and a second wall 202 connected to each other, the first wall 201 being perpendicular to a first direction z, the second wall 202 being a wall with a largest area of the battery cell 20 and oblique to the first direction z, and the first direction z being parallel to the direction of gravity. Each row of battery cells 20 in the at least one row of battery cells 20 are arranged along a second direction y perpendicular to the first direction z, and adjacent ones of the battery cells 20 are attached to each other via the second wall 202.

Optionally, in an embodiment of this application, the box 100 may be the box 100 in the embodiment shown in FIG. 2 above. To facilitate mounting of the box 100 in an electric apparatus, as an example rather than a limitation, the box 100 may be a hollow hexahedral structure.

Optionally, in an embodiment of this application, for an internal structure of the battery cell 20, reference may be made to the related descriptions in the embodiment shown in FIG. 3 above. To facilitate mounting of the battery cells 20 in the box 100 and improve mounting stability of the battery cells 20, the battery cell 20 may be a polyhedral structure. For example, the battery cell 20 may be a hexahedral structure including a first wall 201 and a second wall 202 connected to each other and unperpendicular to each other. Certainly, in other implementations, the battery cell 20 may alternatively be another type of polyhedral structure, so long as the battery cell 20 includes the first wall 201 and the second wall 202 connected to each other and unperpendicular to each other. The specific shape of the battery cell 20 is not limited in embodiments of this application.

Optionally, for the battery cell 20, the first wall 201 and the second wall 202 may be the housing 211, the first cover plate 212a, or the second cover plate 212b of the battery cell 20 in the embodiment shown in FIG. 3 above.

Optionally, the first wall 201 and the second wall 202 may be connected to each other to form a wedge-shaped structure. Specifically, an included angle between the first wall 201 and the second wall 202 may be an acute angle so as to form a wedge-shaped structure with an acute vertex angle.

Or optionally, an included angle between the first wall 201 and the second wall 202 may alternatively be an obtuse angle, in which case it can also be understood as that a wedge-shaped structure with an obtuse vertex angle is formed between the first wall 201 and the second wall 202.

As shown in FIG. 4, the first direction z is parallel to the direction of gravity. In the battery cell 20, the first wall 201 is perpendicular to the first direction z, the second wall 202 is oblique to the first direction z, and the second wall 202 is a wall with a largest area in the battery cell 20 being the polyhedral structure.

In addition, as shown in FIG. 4, the second direction y is perpendicular to the first direction z, that is, the second direction y is perpendicular to the direction of gravity and parallel to the horizontal direction. In the box 100 of the battery 10, a plurality of battery cells 20 may be arranged along the second direction y to form a row of battery cells 20, and adjacent battery cells 20 are attached to each other via adjacent second walls 202, so as to form interaction forces in the first direction z between the adjacent second walls 202.

According to technical solutions in an embodiment of this application, in the box 100 of the battery 10, in the row of battery cells 20 arranged along the second direction y, the second walls 202 of adjacent battery cells 20 attached to each other are oblique to the first direction z, that is, the second walls 202 are oblique to the direction of gravity. Therefore, interaction forces parallel to the direction of gravity are formed between adjacent second walls 202 such that at least one oblique second wall 202 of each battery cell 20 is held down by an oblique second wall 202 of a battery cell 20 adjacent thereto. The interaction forces formed between adjacent battery cells 20 make two adjacent battery cells 20 bind and constrain each other, thus enhancing the overall stiffness and strength of the battery 10 and reducing safety risks caused by vibration and impact on the battery 10 in use.

In addition, in an embodiment of this application, the second wall 202 may be a wall with a largest area in the battery cell 20, so that the second wall 202 with the largest area can be used for implementing attachment between the adjacent battery cells 20 to the greatest extent, which increases the interaction forces between the adjacent battery cells 20, thereby enhancing stability and overall stiffness and strength of the battery 10. Further, a structural adhesive may be applied on the second wall 202, so that adjacent battery cells 20 can be connected to each other via the structural adhesive, which can further improve stability and overall stiffness and strength of the battery 10. In addition, as compared with a wall in the vertical direction, the area of the oblique second wall 202 is greater than that of the vertical wall. Therefore, the structural adhesive applied on the second wall 202 also has a larger area, which can further improve the stability of the battery 10 and the overall stiffness and strength of the battery 10.

Optionally, in some possible implementations, the battery cell 20 may include two first walls 201 parallel to each other and two second walls 202 parallel to each other, and the battery cell 20 has a parallelogram cross section on a plane perpendicular to the first walls 201 and the second walls 202. In these implementations, the battery cell 20 has a relatively regular and symmetrical structure, facilitating manufacture and mounting of the battery cell 20.

Optionally, in some other implementations, the battery cell 20 may include two first walls 201 parallel to each other and two second walls 202 unparallel to each other, the battery cell 20 has a trapezoid cross section on a plane perpendicular to the first walls 201 and the second walls 202, and the two second walls 202 unparallel to each other form waists of the trapezoid cross section.

In the foregoing two manners, the battery cell 20 may include two second walls 202 oblique to the first direction z, so that the battery cell 20 can be attached to adjacent left and right two battery cells 20 via the two oblique second walls 202, thus further implementing interconnection of a plurality of battery cells 20.

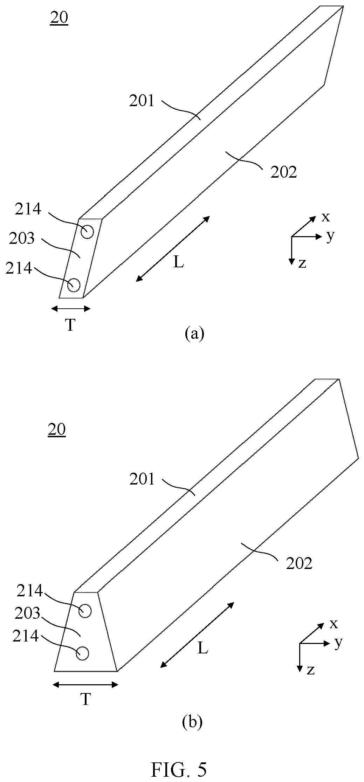

FIG. 5 is a schematic diagram of two types of battery cells 20 according to an embodiment of this application. (a) of FIG. 5 may be an enlarged schematic diagram of the battery cell 20 in FIG. 4.

Optionally, as shown in FIG. 5, the battery cell 20 is a hexahedral structure. The battery cell 20 may include two opposite first walls 201, two opposite second walls 202, and two opposite third walls 203 connected to the first walls 201 and the second walls 202.

Optionally, in the embodiment shown in FIG. 5, the third wall 203 may be perpendicular to the first wall 201 and the second wall 202, so that a shape of the third wall 203 is the same as that of a cross section of the battery cell 20 on a plane perpendicular to the first walls 201 and the second walls 202. That is, as shown in (a) of FIG. 5, the shape of the third wall 203 may be parallelogram, or as shown in (b) of FIG. 5, the shape of the third wall 203 may be trapezoid.

Certainly, the third wall 203 may alternatively be unperpendicular to the first wall 201 and the second wall 202. In this case, the shape of the third wall 203 may also be presented as parallelogram or trapezoid. Specific arrangement of the third wall 203 is not limited in embodiments of this application.

Optionally, in the embodiment shown in FIG. 5, the first wall 201 and the second wall 202 both extend along a length direction L of the battery cell 20, and the length direction L of the battery cell 20 is perpendicular to the first direction z and the second direction y, that is, the length direction L of the battery cell 20 is parallel to a third direction x shown in FIG. 5.

It should be understood that in the three-dimensional space, the size of the polyhedral structure in its length direction is larger than sizes of the polyhedral structure in other directions, in other words, the direction with the largest size in the battery cell 20 of the polyhedral structure is its length direction.

According to these implementations, the first wall 201 and the second wall 202 extend along the length direction L of the battery cell 20, which can make the first wall 201 and the second wall 202 have a longer length and thus have a larger area. For the first wall 201, it is perpendicular to the first direction z, or perpendicular to the direction of gravity, and if the first wall 201 has a larger area, when the battery cell 20 is disposed on the horizontal plane via the first wall 201, the battery cell 20 can have higher stability. For the second wall 202, if it has a larger area, interaction forces between the second walls 202 of adjacent battery cells 20 can be increased, and more structural adhesives can be provided on the second wall 202, improving the stability of the battery cell 10.

Optionally, in the embodiments shown in FIG. 4 and FIG. 5 above, the battery cell 20 may have the largest size in its length direction L, and the battery cell 20 may have the smallest size in its thickness direction T. In the at least one row of battery cells 20, each row of battery cells 20 may be sequentially arranged along the thickness direction T of the battery cells 20, and the thickness direction T of the battery cells 20 may be parallel to the second direction y.

The first battery cells 20 shown in FIG. 4 and FIG. 5 may be called blade battery cells or blade cells. A plurality of blade battery cells can be more easily connected to each other in their thickness direction T and directly mounted as a whole in the box 100 of the battery 10.

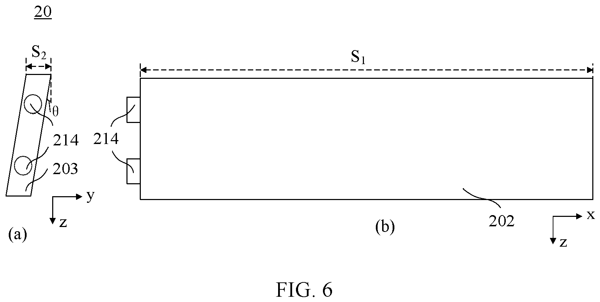

(a) of FIG. 6 is a front view of the battery cell 20 shown in (a) of FIG. 5, and (b) of FIG. 6 is a side view of the battery cell 20 shown in (a) of FIG. 5.

Optionally, as shown in FIG. 6, a first size of the battery cell 20 in its length direction L may be denoted as S₁, and a second size of the battery cell 20 in its thickness direction T may be denoted as S₂.

As an example rather than a limitation, the first size S₁ may be in a range satisfying 100 mm ≤ S₁ ≤ 1400 mm. Further, the first size S₁ may be in a range satisfying 300 mm ≤ S₁ ≤ 1200 mm.

As an example rather than a limitation, the second size S₂ may be in a range satisfying 5 mm ≤ S₂ ≤ 80 mm. Further, the second size S₂ may be in a range satisfying 5 mm ≤ S₂ ≤ 30 mm.

Optionally, as shown in FIG. 6, in the battery cell 20, an included angle between the second wall 202 and the first direction z may be denoted as θ.

As an example rather than a limitation, the included angle θ between the second wall 202 and the first direction z may be in a range satisfying 0° < θ ≤ 60°. Further, the included angle θ between the second wall 202 and the first direction z may be in a range satisfying 0° < θ ≤ 10°.

According to the technical solution of embodiments of this application, controlling the included angle θ between the second wall 202 and the first direction z can balance the space occupied by the battery cell 20 and the stability of the battery cell 20. With a smaller included angle θ, lateral space occupied by the battery cell 20 can be relatively reduced while ensuring mounting stability of the battery cell 20, thus increasing the energy density of the battery 10.

Still referring to FIG. 5 and FIG. 6, in the battery cell 20, the third wall 303 may be correspondingly located at an end of the battery cell 20 in the length direction L and connected to the first wall 201 and the second wall 202.

Optionally, the battery cell 20 may further include an electrode terminal 214 disposed on the third wall 303. Specifically, the battery cell 20 may include two electrode terminals 214: a positive electrode terminal and a negative electrode terminal. In an example, as shown in FIG. 5 and FIG. 6, the two electrode terminals 214 may be disposed at an end on a same side of the battery cell 20 in the length direction L, that is, the two electrode terminals 214 may be disposed on a same third wall 203 of the battery cell 20. In another example, the two electrode terminals 214 may alternatively be disposed at ends on two sides of the battery cell 20 in the length direction L respectively, that is, the two electrode terminals 214 may be disposed on the two third walls 203 of the battery cell 20 respectively.

According to the technical solution of embodiments of this application, the electrode terminal 214 of the battery cell 20 is disposed on the third wall 203 located at the end of the battery cell 20 in the length direction L, without affecting attachment of the first wall 201 and the second wall 202 of the battery cell 20 to other components, where the first wall 201 and the second wall 202 extend along the length direction L of the battery cell 20 and have a larger area. This ensures higher stability of the battery cell 20. In addition, based on actual design requirements, the electrode terminals 214 may be disposed at an end on a same side or ends on different sides of the battery cell 20, so that the battery cell 20 can be flexibly used in various electrical environments.

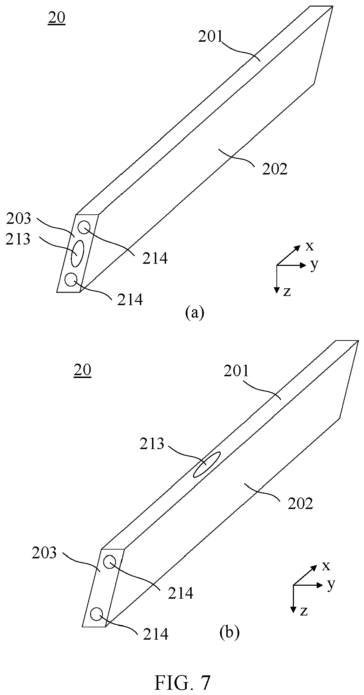

FIG. 7 shows other two schematic structures of a battery cell 20 according to an embodiment of this application.

As shown in FIG. 7, the battery cell 20 may further include a pressure relief mechanism 213, where the pressure relief mechanism 213 may be disposed on a wall other than the second wall 202 in the battery cell 20, that is, the first wall 201 or the third wall 203.

In an example, in an implementation shown in (a) of FIG. (7), the pressure relief mechanism 213 is disposed on the third wall 203 located at the end of the battery cell 20 in the length direction L. Optionally, the pressure relief structure 213 may be disposed with the electrode terminals 214 on a same third wall 203, for example, the pressure relief mechanism 213 may be disposed between two electrode terminals 214. This implementation can facilitate manufacture and mounting of the pressure relief mechanism 213 and the electrode terminals 214 on a same wall of the battery 10. Alternatively, the pressure relief mechanism 213 and the two electrode terminals 214 may be disposed on two different third walls 203 respectively. In this implementation, the pressure relief mechanism 213 and the two electrode terminals 214 may be located on different walls of the battery cell 20 respectively, which can prevent the pressure relief mechanism 213 from affecting the electrode terminals 214 when releasing emissions inside the battery cell, thereby improving safety performance of the battery cell 20.

In another example, in an implementation shown in (b) of FIG. 7, the pressure relief mechanism 213 is disposed on the first wall 201 located at the top or bottom of the battery cell 20. In this implementation, the first wall 201 has a larger area, facilitating manufacture and mounting of the pressure relief mechanism 213 on the first wall 201. In addition, the pressure relief mechanism 213 and the electrode terminals 214 are located on different walls of the battery cell 20 respectively, which can improve the safety performance of the battery cell 20.

It should be noted that in the embodiment shown in FIG. 7, the two electrode terminals 214 being disposed at the end on the same side of the battery cell 20 in the length direction L is used as an example for description. In an alternative, the two electrode terminals 214 may be respectively disposed at two ends of the battery cell 20 in the length direction L. In this case, for the technical solutions related to the pressure relief mechanism 213, reference may still be made to the related descriptions in the embodiment shown in FIG. 7 above, and details are not repeated herein.

It should be also noted that in the embodiments shown in FIG. 6 and FIG. 7, the shape of the battery cell 20 being the shape of the battery cell 20 shown in (a) of FIG. 5 is used as an example for description. In an alternative, the shape of the battery cell 20 in FIG. 6 and FIG. 7 may be the shape of the battery cell 20 shown in (b) of FIG. 5. For the technical solutions related to the electrode terminal 214 and the pressure relief mechanism 213, reference may be made to the related descriptions in the foregoing embodiments, and details are not repeated herein either.

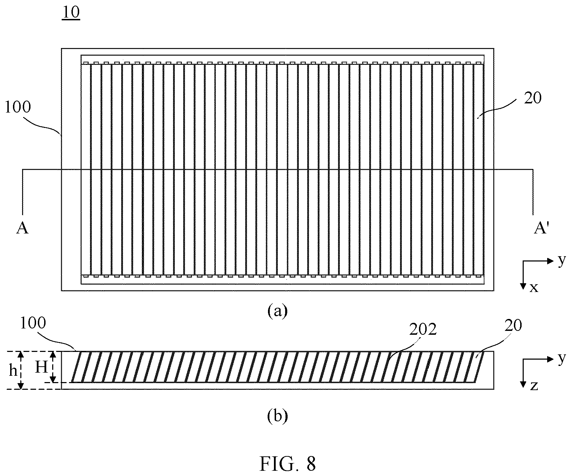

The battery cell 20 in the embodiments of this application is described above with reference to FIG. 5 to FIG. 7, and the arrangement of the at least one row of battery cells 20 formed by a plurality of battery cells 20 in the box 100 of the battery 10 in the embodiments of this application is described below with reference to FIG. 8 to FIG. 13.

FIG. 8 is a schematic top and cross-sectional view of a battery 10 according to an embodiment of this application. (a) of FIG. 8 is a schematic top view of the battery 10, and (b) of FIG. 8 is a schematic cross-sectional view along A-A' in (a).

In an example, a shape of a battery cell 20 in FIG. 8 may be the same as that of the battery cell 20 shown in (a) of FIG. 5.

In an example, FIG. 8 only schematically shows a row of battery cells 20 in the battery 10. In the row of battery cells 20, a plurality of battery cells 20 are arranged along a second direction y and sequentially attached to each other via second walls 202 of the battery cells 20 to form an entirety. No other spacer is provided in the row of battery cells 20.

According to the technical solution of embodiments of this application, a plurality of battery cells 20 in a same row are sequentially attached to each other to form an entirety and be mounted in the box 100, and no other spacer is provided between the plurality of battery cells 20, so that energy density and overall quality of the battery 10 can be improved, optimizing overall performance of the battery 10.

Optionally, as described in the foregoing embodiments, the second direction y may be parallel to a thickness direction T of the plurality of battery cells 20, so that the plurality of battery cells 20 can be easily attached to each other and mounted as a whole in the box 100.

In an example, as shown in (a) of FIG. 8, two electrode terminals 214 of the battery cell 20 are respectively disposed at two ends of the battery cell 20 in a length direction L of the battery cell 20. Or in an alternative, the two electrode terminals 214 of the battery cell 20 may be disposed at a same end of the battery cell 20 in the length direction L of the battery cell 20. In addition, a pressure relief mechanism 213 and other components of the battery cell 20 are not shown in FIG. 8. For the technical solutions related to the pressure relief structure 213 and other components, reference may be made to the related descriptions above and in the related technologies, and details are not repeated herein.

As shown in (b) in FIG. 8, in the second direction y, the plurality of battery cells 20 are sequentially attached to each other via the second walls 202 to form a row of battery cells 20 adjacent to each other. In two adjacent battery cells 20, two adjacent second walls 202 are parallel to each other, so that the two second walls 202 can be attached to each other, so as to form interaction forces between the two second walls 202 attached to each other.

In an example, as shown in (b) of FIG. 8, in the same row of battery cells 20, the plurality of battery cells 20 have parallelogram cross sections on a plane (that is, the yz plane shown in the figure) perpendicular to first walls 201 and the second walls 202, that is, the second walls 202 of the plurality of battery cells 20 in the same row are parallel to each other, so that the plurality of battery cells 20 in the same row can be sequentially attached to each other via the second walls 202, which can more easily implement mounting and connection between the plurality of battery cells 20, thus simplifying a manner of mounting the plurality of battery cells 20 in the box 100 and improving the production efficiency of the battery 10.

In another example, the plurality of battery cells 20 may alternatively have trapezoid cross sections on the plane (that is, the yz plane shown in the figure) perpendicular to the first walls 201 and the second walls 202. In this example, two second walls 202 of each battery cell 20 are unparallel to each other, while two adjacent second walls 202 of two adjacent battery cells 20 are parallel to each other, so that the plurality of battery cells 20 in the same row can be sequentially attached to each other via the second walls 202, which can also implement mutual mounting and connection between the plurality of battery cells 20.

For disposition of the row of battery cells 20 in the box 100 in FIG. 8, it can be understood that the overall size of the row of battery cells 20 can be adapted to the size of a hollow cavity in the box 100. In the following description, the size of the hollow cavity in the box 100 is also simply referred to as the size of the box 100.

In the first direction z, the overall size of the row of battery cells 20 is the size of a single battery cell 20. As an example rather than a limitation, as shown in (b) of FIG. 8, a size H of a single battery cell 20 in the first direction z and a size h of the box 100 in the first direction z are in a relation satisfying h = H + c, where 0 mm ≤ c ≤ 50 mm. Further, 15 mm ≤ c ≤ 25 mm.

In this way, in the first direction z, the size of the box 100 may be slightly larger than that of the battery cell 20, which facilitates mounting of the battery cell 20 in the box 100 and takes into account the overall volume and energy density of the battery 10. Similarly, in other directions, for example, in the second direction y and the third direction z, the size of the box 100 may also be slightly larger than the overall size of a row of battery cells 20.

Optionally, in some implementations, a length direction of the box 100 may be parallel to the second direction y, so that as many battery cells 20 as possible are arranged along the length direction of the box 100. Or in other implementations, the length direction of the box 100 may be perpendicular to the second direction y and parallel to the third direction x.

It can be understood that, in embodiments of this application, the specific size and shape of the box 100 can be designed according to the overall size of the at least one row of battery cells 20 in the battery 10. They are not specifically limited in embodiments of this application.

In the embodiment shown in FIG. 8, the plurality of battery cells 20 in the same row can be mutually connected via the second walls 202 for easy mounting of the plurality of battery cells 20 in the box 100. However, as the second wall 202 of the battery cell 20 has a larger area, high-pressure gas and heat are produced inside the battery cell 20 in continuous operation. The high-pressure gas causes the battery cell 20 to swell, producing great stress on the second walls 202 with a larger area; and most of the heat inside the battery is transferred through the second walls 202 with a larger area.

Therefore, in the embodiment shown in FIG. 8, the second walls 202 of the plurality of battery cells 20 are attached to each other. Continuous accumulation of stress on the second walls 202 generated by swelling of the plurality of battery cells 20 affects strength and stiffness of the battery 10 in the arrangement direction of the plurality of battery cells 20, that is, the second direction y, thus affecting overall stability and safety of the battery 10. In addition, when any battery cell 20 in a row of battery cells 20 experiences thermal runaway, a large amount of heat generated by the battery cell 20 is also transferred to other multiple battery cells 20 through the second walls 202, affecting performance of the other multiple battery cells 20 and possibly causing thermal runway of the other multiple battery cells 20, thus leading to quite serious safety problems.

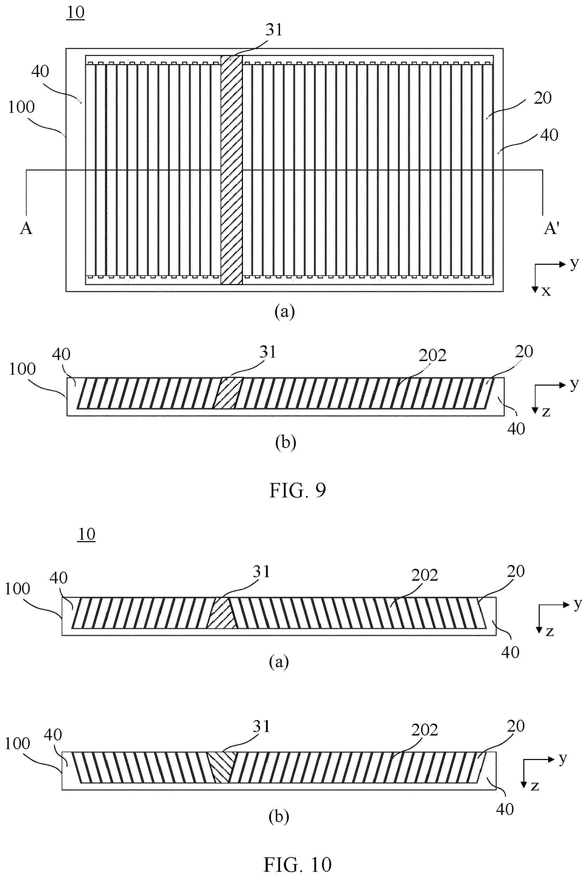

Based on this, on the basis of the embodiment of this application shown in FIG. 8, FIG. 9 is another schematic top and cross-sectional view of a battery 10 according to an embodiment of this application. (a) of FIG. 9 is a schematic top view of the battery 10, and (b) of FIG. 9 is a schematic cross-sectional view along A-A' in (a).

As shown in (a) and (b) of FIG. 9, a first spacer 31 is provided between the plurality of battery cells 20 in the same row, where the first spacer 31 has walls oblique to the first direction z so as to be attached to the second walls 202 of two battery cells 20 adj acent to the first spacer 31. The first spacer 31 may be at least one of the following structures: a cross beam, a thermal management component, and a structural adhesive.

In an example, as shown in (b) of FIG. 9, the plurality of battery cells 20 in the same row have parallelogram cross sections on the yz plane, the first spacer 31 also has a parallelogram cross section on the yz plane, and the first spacer 31 has two opposite walls oblique to the first direction z so as to be attached to the second walls 202 of the two battery cells 20 adjacent thereto.

In addition, as shown in (a) of FIG. 9, the first spacer 31 may also extend along a length direction L (that is, the third direction x) of the battery cell 20, and the length of the first spacer 31 may be greater than or equal to that of the battery cell 20, so that the first spacer 31 can sufficiently space apart two adjacent battery cells 20. In an example, two ends of the first spacer 31 in its length direction may separately abut against the box 100 to enhance stability of the first spacer 31 in the box 100, thereby enhancing stability of the battery cells 20 attached to the first spacer 31 in the box 100.

As in an example, if the first spacer 31 is a cross beam, the first spacer 31 may have certain stiffness and strength and is provided between a row of battery cells 20. On one hand, the overall stiffness and strength of the battery 10 can be enhanced, improving the overall impact resistance of the battery 10. On the other hand, the first spacer 31 can also support the second walls 202 of the battery cells 20, avoiding continuous accumulation of stress of the plurality of battery cells 20 in an arrangement direction thereof in case of swelling of the battery cells 20, enhancing strength and stiffness of the plurality of battery cells 20 in the arrangement direction thereof, and improving overall stability and safety of the battery 10. On the third hand, the first spacer 31 can further block heat transfer. When a battery cell 20 located on one side of the first spacer 31 experiences thermal runaway, a large amount of heat generated by this battery cell is blocked by the first spacer 31 to some extent, thereby preventing the heat from being transferred to a battery cell 20 located on the other side of the first spacer 31, guaranteeing normal operation of the battery cell 20 located on the other side of the first spacer 31, and improving the overall safety of the battery 10.

In addition to being a cross beam, the first spacer 31 may alternatively be a thermal management component, for example, a cooling component such as a cooling plate. This thermal management component has a thermal management function for the battery cells 20 apart from having certain stiffness and strength, and can regulate the temperature of the battery cells 20, further guaranteeing working performance and safety performance of the battery 10.

In other alternative implementations, the first spacer 31 may alternatively be a structural adhesive with enough thickness or another type of component, so long as the first spacer 31 can space apart two adjacent battery cells 20 in a same row and have enough stiffness and strength to support the second walls 202 of the battery cells 20. The specific structure of the first spacer 31 is not limited in embodiments of this application.

FIG. 10 shows two cross-sectional views of a battery 10 according to an embodiment of this application. (a) and (b) of FIG. 10 are two schematic cross-sectional views along direction A-A' in (a) of FIG. 9.

As shown in (a) and (b) of FIG. 10, the first spacer 31 has a trapezoid cross section on the yz plane.

That is, in this embodiment of this application, second walls 202 of two battery cells 20 located on two sides of the first spacer 31 are unparallel to each other. Optionally, an included angle between a second wall 202 of one battery cell 20 located on one side of the first spacer 31 and the first direction z may be 01, and an included angle between a second wall 202 of the other battery cell 20 located on the other side of the first spacer 31 and the first direction z may be -θ2. For ranges of θ1 and θ2, reference may be made to the related descriptions of the range of θ above.

Optionally, as shown in (a) and (b) of FIG. 10, second walls 202 of a first group of battery cells 20 located on one side of the first spacer 31 are parallel to each other, and the first group of battery cells 20 are attached to each other via the second walls 202 thereof. Similarly, second walls 202 of a second group of battery cells 20 located on the other side of the first spacer 31 are also parallel to each other, and the second group of battery cells 20 are also attached to each other via the second walls 202 thereof. The second walls 202 of the first group of battery cells 20 and the second walls 202 of the second group of battery cells 20 may be symmetrical with respect to the first direction z.

In this case, when a plurality of battery cells 20 swell, stress generated in an arrangement direction (the second direction y) of the first group of battery cells 20 can partially offset with stress generated in an arrangement direction (the second direction y) of the second group of battery cells 20, thereby further enhancing the overall stiffness and strength of the battery 10, improving the stability of the battery 10, and guaranteeing the safety performance of the battery 10.

In the embodiments shown in FIG. 9 and FIG. 10 above, the battery 10 including one first spacer 31 is merely used as an example for description. Optionally, the battery 10 may include a plurality of first spacers 31, where the plurality of first spacers 31 may be respectively disposed at different positions in a same row of battery cells 20.

As an example rather than a limitation, the first spacer 31 may be provided in a quantity of less than or equal to 5. Further, the first spacer 31 may be provided in a quantity of 1 to 3 to balance the overall strength and energy density of the battery 10.

In addition, to guarantee mounting stability of a plurality of battery cells 20 in the box 100, optionally, as shown in FIG. 9 and FIG. 10, the battery 10 may further include an end plate 40 disposed at least at one end of the at least one row of battery cells 20 in the second direction y. The end plate 40 may have a wall oblique to the first direction z so as to adapt to the second wall of the battery cell 20, where the oblique wall is configured to be attached to the second wall 202 of the battery cell 20. Optionally, in some implementations, the end plate 40 may be a side wall of the box 100 in the second direction y.

Specifically, as shown in (a) of FIG. 9, the end plate 40 is provided at each of two ends of a row of battery cells 20 so as to fasten and constrain the row of battery cells 20 in the second direction y. In addition, the end plates 40 are further configured to support the second walls 202 located on two sides of the row of battery cells 20 and having a larger area, and bear stress on the second walls 202 caused by swelling of the battery cells 20. Optionally, the end plate 40 may extend along the length direction L (that is, the third direction x in the figures) of the first battery cells 20 to be fully attached to the battery cells 20 and to support the battery cells 20.

As shown in (b) of FIG. 9 and (a) and (b) of FIG. 10, the end plate 40 may have a right trapezoid cross section on the yz plane, where one end surface of the end plate 40 is configured to fit the oblique second wall 202 of the battery cell 20, and other end surfaces are parallel or perpendicular to the horizontal plane so that the end plate 40 can be better fitted with and mounted in the box 100 of a regular shape such as a hollow rectangular structure, and the mounting stability of the end plate 40 and the battery cells 20 attached thereto in the box 100. In addition, a local region of the end plate 40 of such structure has a larger thickness in the second direction y, and thus the local region has higher stiffness and strength in the second direction y, enhancing the overall stiffness, strength, and stability of the battery 10.

Optionally, thickness of the end plate 40 at an end facing the direction of gravity is greater than thickness of the end plate 40 at an end facing away from the direction of gravity. In an example, as shown in (b) of FIG. 10, the battery 10 may include two end plates 40, where thickness of each end plate 40 in the two end plates 40 at an end facing the direction of gravity is greater than thickness at an end thereof facing away from the direction of gravity, that is, each end plate 40 has a larger thickness at the end facing the direction of gravity, which can ensure that the battery 10 has higher rigidity, strength and stability at an end facing the direction of gravity. When the battery 10 is mounted at a chassis of a vehicle, the battery 10 can better resist external impact such as flying stones on the bottom of the vehicle, thus improving the mounting stability of the battery 10 in the vehicle and guaranteeing operation performance of the battery 10.

Certainly, FIG. 9 to FIG. 10 only schematically show several schematic structures of the end plate 40 according to the embodiments of this application. The end plate 40 may also be a conventional rectangular plate structure or other structures in addition to the shapes shown in FIG. 9 and FIG. 10, and a gap between the end plate 40 and the battery cells 20 may be filled by a structural adhesive or other related components.

In the embodiments shown in FIG. 8 to FIG. 10 above, the battery 10 including a row of battery cells 20 is used as an example for description. Optionally, the battery 10 may alternatively include a plurality of rows of battery cells 20.

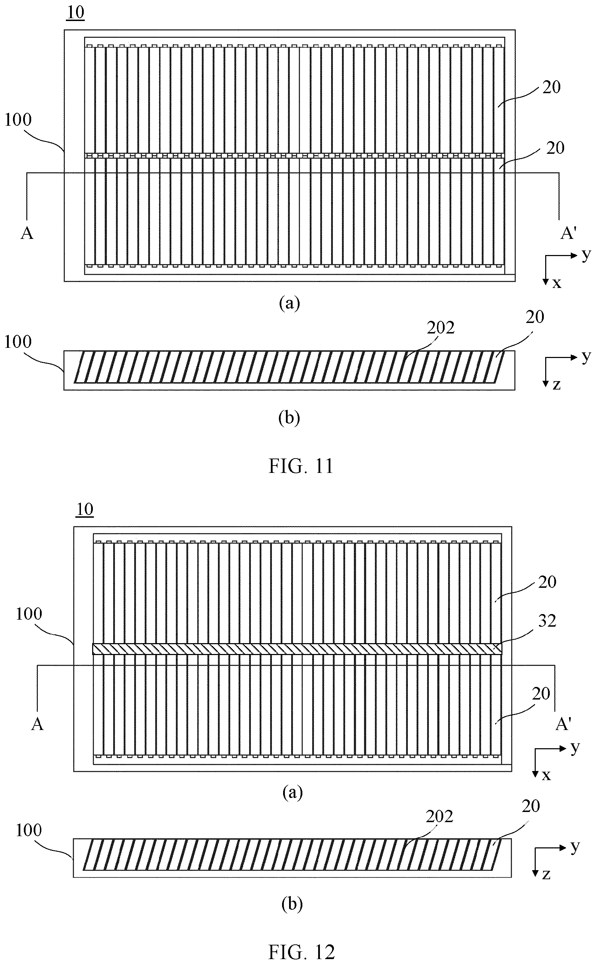

FIG. 11 is another schematic top and cross-sectional view of a battery 10 according to an embodiment of this application. (a) of FIG. 11 is a schematic top view of the battery 10, and (b) of FIG. 11 is a schematic cross-sectional view along A-A' in (a).

As shown in (a) of FIG. 11, in an embodiment of this application, the battery 10 may include two rows of battery cells, where two electrode terminals 214 of each battery cell 20 may be respectively disposed at two ends of the battery cell 20 in a length direction L (the third direction x) of the battery cell 20. Electrode terminals 214 between the two rows of battery cells 20 can be electrically connected to each other to implement electric energy transfer of the two rows of battery cells 20.

Optionally, (b) of FIG. 11 only schematically shows a cross-sectional view of the battery 10 according to the embodiments of this application, that is, a plurality of battery cells 10 have parallelogram cross sections. Optionally, the plurality of battery cells 10 may alternatively have trapezoid cross sections.

In addition, it should be noted that a schematic view of the first spacer member 31 described above is not shown in FIG. 11. The first spacer member 31 may be provided in at least one of the two rows of battery cells 20. Specifically, for provision manner of the first spacer 31 in each row of battery cells 20, reference may be made to the related descriptions in the foregoing embodiments, and details are not repeated herein. It can be understood that if the first spacer 31 is provided in both of the two rows of battery cells 20, the first spacers 31 in the upper and lower rows may be connected to form an integrated structure, thereby increasing stiffness and strength of the first spacer 31.

It should also be noted that, in addition to that the electrode terminals 214 of the battery cell 20 may be respectively disposed on two ends of the battery cell 20 in the length direction L (the third direction x) of the battery cell 20 as shown in FIG. 11, in other examples, the two electrode terminals 214 of the battery cell 20 may alternatively be disposed on a same end of the battery cell 20 along the length direction L (the third direction x) of the battery cell 20. For example, in the embodiment shown in (a) of FIG. 11, the two electrode terminals 214 of the battery cell 20 in the upper row are both disposed on the upper side of the battery cell 20, while the two electrode terminals 214 of the battery cell 20 in the lower row are both disposed on the lower side of the battery cell 20.

In a case that the battery 10 includes a plurality of rows of battery cells 20, optionally, a second spacer 32 may be provided between two adjacent rows of battery cells 20, where the second spacer 32 is at least one of the following structures: a cross beam, a thermal management component, and a structural adhesive.

FIG. 12 is another schematic top and cross-sectional view of a battery 10 according to an embodiment of this application. (a) of FIG. 12 is a schematic top view of the battery 10, and (b) of FIG. 12 is a schematic cross-sectional view along A-A' in (a).

As shown in FIG. 12, the battery cell 10 further includes a second spacer 32 disposed between two rows of battery cells 20, where the second spacer 32 may extend along an arrangement direction (that is, the second direction y) of a row of battery cells 20 and may have a length greater than or equal to the overall length of the row of battery cells 20 such that the second spacer 32 can fully space apart the two adjacent rows of battery cells 20. In an example, two ends of the second spacer 32 in its length direction may separately abut against the box 100 to enhance stability of the second spacer 32 in the box 100, thereby enhancing stability of the battery cells 20 attached to the second spacer 32 in the box 100.

It can be understood that the size of the second spacer 32 in the first direction y may alternatively be the same as the size of each battery cell 20 in the first direction y. In this case, in the two adjacent rows of battery cells 20, the third wall 203 on one side of each battery cell 20 can abut against the second spacer 32, and the third wall 203 on the other side thereof can be provided with two electrode terminals 214 of the battery cell 20, so that the second spacer 32 can sufficiently support the two rows of battery cells 20, without affecting disposition of other related components such as the electrode terminals 214 and the busbar in the two rows of battery cells 20.

As in an example, if the second spacer 32 is a cross beam, the second spacer 32 may have certain stiffness and strength. Disposing the second spacer 32 between two adjacent rows of battery cells 20 can enhance the overall stiffness and strength of the battery 10 and improve the overall impact resistance of the battery 10. In addition, if the second spacer 32 is a thermal management component, for example, a cooling component such as a cooling plate, this thermal management component has a thermal management function for the battery cells 20 apart from having certain stiffness and strength, and can regulate the temperature of the battery cells 20, further guaranteeing working performance and safety performance of the battery 10. In other alternative implementations, the second spacer 32 may alternatively be a structural adhesive with enough thickness or another type of component, so long as the second spacer 32 can space apart two adjacent rows of battery cells 20. The specific structure of the second spacer 32 is not limited in embodiments of this application.

Optionally, the battery 10 may further include thermal management components 50 corresponding to walls other than the second walls 202 of the at least one row of battery cells 20 for thermal management of the at least one row of battery cells 20.

Specifically, the thermal management component 50 may be configured to accommodate fluid to regulate temperature of the battery cells 20. The fluid herein may be liquid or gas. Regulating temperatures means heating or cooling the battery cells 20. In the case of cooling or lowering the temperature of the battery cells 20, the thermal management component 50 is configured to accommodate cooling fluid to lower the temperature of the battery cells 20. In this case, the thermal management component 50 may also be called a cooling component, cooling system, cooling plate, or the like, and the fluid accommodated therein may also be called a cooling medium or cooling fluid, and more specifically, may be called cooling liquid or cooling gas. In addition, the thermal management component 50 may further be configured to heat and raise the temperature of the battery cells 20. This is not limited in embodiments of this application. Optionally, the fluid may be circulated to achieve a better temperature regulation effect. Optionally, the fluid may be water, a mixture of water and ethylene glycol, air, or the like.

Optionally, in an embodiment of this application, the thermal management components 50 may be disposed corresponding to the walls other than the second walls 202 of the at least one row of battery cells 20, that is, the thermal management components 50 may be disposed corresponding to the first walls 201 or the third walls 203 of the at least one row of battery cells 20 for thermal management of each battery cell 20 in the at least one row of battery cells 20. The first wall 201 has a larger area, and the thermal management components 50 may be disposed corresponding to the first walls 201 of the at least one row of battery cells 20, so as to enhance the temperature management of the thermal management components 50 on the battery cells 20.

As an example rather than a limitation, the thermal management components 50 may be disposed on a side of the at least one row of battery cells 20 facing interior of an electric apparatus in which the at least one row of battery cells 20 are located; and the pressure relief mechanism 213 of the at least one row of battery cells 20 is disposed on a side of the at least one row of battery cells 20 facing away from the interior of the electric apparatus in which the at least one row of battery cells 20 are located.

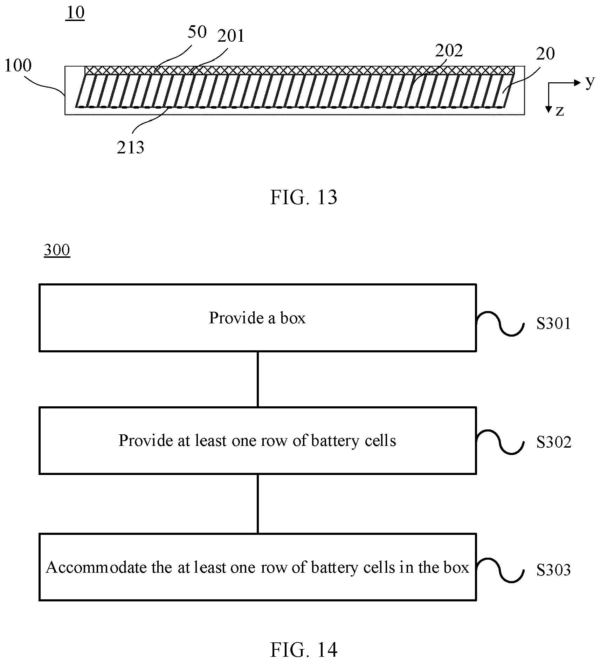

FIG. 13 is another schematic cross-sectional view of a battery 10 according to an embodiment of this application.

As shown in FIG. 13, the thermal management components 50 may be disposed corresponding to the first walls 201 of the at least one row of battery cells 20 and located on a side of the at least one row of battery cells 20 facing away from the direction of gravity. Optionally, in some application scenarios, the side of the at least one row of battery cells 20 facing away from the direction of gravity is a side facing interior of an electric apparatus in which the at least one row of battery cells 20 are located. For example, the battery 10 may be located at a chassis of a vehicle, and the side of the at least one row of battery cells 20 facing away from the direction of gravity is a side of the at least one row of battery cells 20 facing interior of the vehicle. The thermal management component 50 is disposed on the side of the at least one row of battery cells 20 facing the interior of the electric apparatus in which the at least one row of battery cells 20 are located, which can isolate the at least one row of battery cells 20 from the interior of the electric apparatus, preventing impact on the interior of the electric apparatus caused by thermal runaway of the battery cell 20, thus improving overall safety performance of the electric apparatus.

Based on this, optionally, the pressure relief mechanism 213 of the at least one row of battery cells 20 may be disposed opposite the thermal management component 50, that is, the pressure relief mechanism 213 may be located on the first wall 201 on the side of the at least one row of battery cells 20 facing the direction of gravity. In this case, in some application scenarios, the pressure relief mechanism 213 of the at least one row of battery cells 20 is disposed on the side of the at least one row of battery cells 20 facing away from the interior of the electric apparatus in which the at least one row of battery cells are located.

According to this implementation, the pressure relief mechanism 213 of the at least one row of battery cells 20 is disposed away from the interior of the electric apparatus, which can reduce the impact on the interior of the electric apparatus caused by high-temperature emissions discharged by the battery cell 20 through the pressure relief mechanism 213 when the battery cell 20 experiences thermal runaway, further improving safety performance of the electric apparatus.

Or in other implementations, the pressure relief mechanism 213 of the at least one row of battery cells 20 may alternatively be disposed on the first wall 201 corresponding to the thermal management component 50, so that when the battery cell 20 experiences thermal runaway, high-temperature emissions discharged through the pressure relief mechanism 213 cause impact on the thermal management component 50, and the fluid in the thermal management component 50 flows out to lower the temperature of the battery cell 20 experiencing thermal runaway, which can prevent the battery cell 20 from affecting other components in the battery 10 and can also guarantee safety performance of the electric apparatus to some extent.

Or the pressure relief mechanism 213 of the at least one row of battery cells 20 may alternatively be disposed on the third wall 203. The third wall 203 does not face the interior of the electric apparatus. When the pressure relief mechanism 213 is located on the third wall 203, the high-temperature emissions discharged through the pressure relief mechanism 213 have little impact on the interior of the electric apparatus, which can also guarantee the safety performance of the electric apparatus to some extent.

An embodiment of this application further provides an electric apparatus, where the electric apparatus may include the battery 10 in the foregoing embodiments, and the battery 10 is configured to supply electric energy to the electric apparatus.

Optionally, the electric device may be a vehicle 1, a ship, or a spacecraft.

The foregoing describes the battery 10 and the electric apparatus in the embodiments of this application; and the following describes a method and device for manufacturing battery in the embodiments of this application. For those not described in detail, refer to the foregoing embodiments.

FIG. 14 is a schematic flowchart of a method 300 for manufacturing battery according to an embodiment of this application. As shown in FIG. 14, the method 300 may include the following steps.

S301. Provide a box 100.

S301. Provide at least one row of battery cells 20. The battery cell 20 is a polyhedral structure and includes a first wall 201 and a second wall 202 connected to each other, the first wall 201 being perpendicular to a first direction z, the second wall 202 being a wall with a largest area in the battery cell 20 and oblique to the first direction z, and the first direction z being parallel to the direction of gravity. Each row of battery cells 20 in the at least one row of battery cells 20 are arranged along a second direction y perpendicular to the first direction z, and adjacent ones of the battery cells 20 are attached to each other via the second wall 202.

S303. Accommodate the at least one row of battery cells 20 in the box 100.

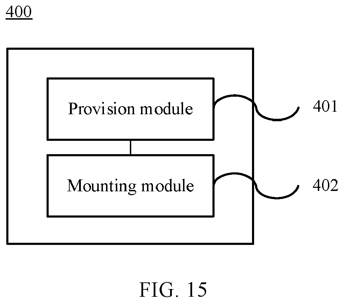

FIG. 15 is a schematic block diagram of an apparatus 400 for manufacturing battery according to an embodiment of this application. As shown in FIG. 15, the apparatus 400 for manufacturing battery may include a provision module 401 and a mounting module 402.

The provision module 401 is configured to: provide a box 100; and provide at least one row of battery cells 20, where the battery cell 20 is a polyhedral structure and includes a first wall 201 and a second wall 202 connected to each other, the first wall 201 being perpendicular to a first direction z, the second wall 202 being a wall with a largest area in the battery cell 20 and oblique to the first direction z, and the first direction z being parallel to the direction of gravity; where each row of battery cells 20 in the at least one row of battery cells 20 are arranged along a second direction y perpendicular to the first direction z, and adjacent ones of the battery cells 20 are attached to each other via the second wall 202.

The mounting module 402 is configured to accommodate the at least one row of battery cells 20 in the box 100.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any form. This application is not limited to the specific embodiments disclosed in this specification but includes all technical solutions falling within the scope of the claims.

## Claims

1. A battery (10), **characterized by** comprising:
a box (100); and
at least one row of battery cells (20) accommodated in the box (100), wherein the battery cell (20) is a polyhedral structure and comprises a first wall (201) and a second wall (202) connected to each other, the first wall (201) being perpendicular to a first direction (z), the second wall (202) being a wall with a largest area in the battery cell (20) and oblique to the first direction (z), and the first direction (z) being parallel to the direction of gravity; wherein
each row of battery cells (20) in the at least one row of battery cells (20) are arranged along a second direction (y) perpendicular to the first direction (z), and adjacent ones of the battery cells (20) are attached to each other via the second wall (202).

2. The battery (10) according to claim 1, **characterized in that** the battery cell (20) comprises two first walls (201) parallel to each other and two second walls (202) parallel to each other, and the battery cell (20) has a parallelogram cross section on a plane perpendicular to the first walls (201) and the second walls (202).

3. The battery (10) according to claim 1, **characterized in that** the battery cell (20) comprises two first walls (201) parallel to each other and two second walls (202) unparallel to each other, and the battery cell (20) has a trapezoid cross section on a plane perpendicular to the first walls (201) and the second walls (202).

4. The battery (10) according to any one of claims 1 to 3, **characterized in that** the first wall (201) and the second wall (202) extend along a length direction of the battery cell (20), and the length direction of the battery cell (20) is perpendicular to the first direction (z) and the second direction (y).

5. The battery (10) according to any one of claims 1 to 4, **characterized in that** each row of battery cells (20) are arranged sequentially along a thickness direction of the battery cells (20), wherein the thickness direction of the battery cells (20) is parallel to the second direction (y).

6. The battery (10) according to any one of claims 1 to 5, **characterized in that** the battery cell (20) further comprises a third wall (203) located at an end of the battery cell (20) in the length direction and connected to the first wall (201) and the second wall (202); and
the battery cell (20) further comprises an electrode terminal (214) disposed on the third wall (203).

7. The battery (10) according to claim 6, **characterized in that** the battery cell (20) further comprises a pressure relief mechanism disposed on the third wall (203) or the first wall (201).

8. The battery (10) according to any one of claims 1 to 7, **characterized in that** in the at least one row of battery cells (20), a plurality of battery cells (20) in a same row are sequentially attached to each other via the second wall (202) to form an entirety.

9. The battery (10) according to any one of claims 1 to 7, **characterized in that** in the at least one row of battery cells (20), a first spacer (31) is provided between the plurality of battery cells (20) in the same row; and
the first spacer (31) has walls oblique to the first direction (z) so as to be attached to the second walls (202) of two battery cells (20) adjacent thereto, wherein the first spacer (31) is at least one of the following structures: a cross beam, a thermal management component, and a structural adhesive.

10. The battery (10) according to claim 9, **characterized in that** the first spacer (31) has a parallelogram or trapezoid cross section on the plane perpendicular to the first walls (201) and the second walls (202).

11. The battery (10) according to claim 9 or 10, **characterized in that** the first spacer (31) is provided in a quantity of less than or equal to 5.

12. The battery (10) according to any one of claims 1 to 11, **characterized in that** a second spacer (32) is provided between two adjacent rows of battery cells (20), and the second spacer (32) is at least one of the following structures: a cross beam, a thermal management component, and a structural adhesive.

13. The battery (10) according to any one of claims 1 to 12, **characterized in that** the battery (10) further comprises an end plate (40) disposed at least at one end of the at least one row of battery cells (20) in the second direction (y), wherein the end plate (40) has a wall oblique to the first direction (z), and the oblique wall is configured to be attached to the second wall (202) of the battery cell (20).

14. The battery (10) according to claim 13, **characterized in that** thickness of the end plate (40) at an end facing the direction of gravity is greater than thickness of the end plate (40) at an end facing away from the direction of gravity.

15. The battery (10) according to any one of claims 1 to 14, **characterized in that** the battery (10) further comprises thermal management components (50) corresponding to walls other than the second walls (202) of the at least one row of battery cells (20) for thermal management of the at least one row of battery cells (20).

16. The battery (10) according to claim 15, **characterized in that** the thermal management component (50) is disposed on a side of the at least one row of battery cells (20) facing interior of an electric apparatus in which the at least one row of battery cells (20) are located.

17. The battery (10) according to claim 16, **characterized in that** the pressure relief mechanism of the at least one row of battery cells (20) is disposed on a side of the at least one row of battery cells (20) facing away from the interior of the electric apparatus in which the at least one row of battery cells (20) are located.

18. An electric apparatus, **characterized by** comprising the battery (10) according to any one of claims 1 to 17, wherein the battery (10) is configured to supply electric energy to the electric apparatus.

19. A method for manufacturing battery, **characterized by** comprising:
providing (S301) a box (100);
providing (S302) at least one row of battery cells (20), wherein the battery cell (20) is a polyhedral structure and comprises a first wall (201) and a second wall (202) connected to each other, the first wall (201) being perpendicular to a first direction (z), the second wall (202) being a wall with a largest area in the battery cell (20) and oblique to the first direction (z), and the first direction (z) being parallel to the direction of gravity; wherein each row of battery cells (20) in the at least one row of battery cells (20) are arranged along a second direction (y) perpendicular to the first direction (z), and adjacent ones of the battery cells (20) are attached to each other via the second wall (202); and
accommodating (S303) the at least one row of battery cells (20) in the box (100).

20. An apparatus for manufacturing battery, **characterized by** comprising:
a provision module (401), configured to:
provide a box (100); and
provide at least one row of battery cells (20), wherein the battery cell (20) is a polyhedral structure and comprises a first wall (201) and a second wall (202) connected to each other, the first wall (201) being perpendicular to a first direction (z), the second wall (202) being a wall with a largest area in the battery cell (20) and oblique to the first direction (z), and the first direction (z) being parallel to the direction of gravity; wherein each row of battery cells (20) in the at least one row of battery cells (20) are arranged along a second direction (y) perpendicular to the first direction (z), and adjacent ones of the battery cells (20) are attached to each other via the second wall (202); and
a mounting module (402), configured to:
accommodate the at least one row of battery cells (20) in the box (100).
